# FASCICULE DE BREVET EUROPEEN

(11) **EP 2 246 604 B1**
(45) Date de publication et mention de la délivrance du brevet: **20.06.2012**
(21) Numéro de dépôt: 10161417.0
(22) Date de dépôt: 29.04.2010
(51) Int. Cl.: F16L 27/093, F16K 27/00, F24D 3/10

(54) **Nourrice de distribution ou de collecte de fluide et installation de moulage comprenant une telle nourrice**
Flüssigkeitsströmungsverteiler- oder Flüssigkeitsströmungssammler-Vorrichtung und Formeinrichtung mit solcher Vorrichtung
Fluid flow distribuitor or collector device and molding system comprising such device

(30) Priorité: 30.04.2009 FR 0902118
(43) Date de publication de la demande: 03.11.2010
(73) Titulaire: Staubli Faverges, 74210 Faverges (FR)
(72) Inventeur: Tiberghien, Alain-Christophe, 74320 Sévrier (FR); Durieux, Christophe, 73200 Gilly sur Isère (FR); Emeyriat, Stéphane, 74150 Marcellaz-Albanais (FR)
(74) Mandataire: Myon, Gérard Jean-Pierre

(56) Documents cités:
- EP-A2- 2 014 991
- AU-B2- 604 748
- GB-A- 1 274 224
- US-A- 2 083 970

## Description

L'invention a trait à une nourrice de distribution ou de collecte d'un fluide, ainsi qu'à une installation de moulage comprenant, entre autres, une telle nourrice.

Dans le domaine des installations de moulage, il est connu d'utiliser une nourrice pour répartir un fluide, tel qu'un liquide caloporteur, entre une ou plusieurs entrées et une ou plusieurs sorties destinées à être raccordées à plusieurs points d'utilisation du fluide caloporteur notamment en vue de chauffer ou de maintenir à une température donnée une ou plusieurs parties d'un moule.

Dans le domaine sanitaire, il est connu de US-A-4 848 391 de réaliser une nourrice en empilant des modules juxtaposés dont les volumes internes respectifs forment un conduit central et qui sont équipés de sorties radiales. Ces modules sont assemblés au moyen de tirants, c'est-à-dire de tiges filetées au moins à leurs deux extrémités, qui exercent un effort de compression sur l'empilement de modules permettant d'assurer le verrouillage et l'étanchéité de leur assemblage. Chaque module peut être disposé dans trois configurations angulaires différentes. Lorsqu'il convient de modifier la configuration de la nourrice, c'est-à-dire l'orientation angulaire relative de certains des modules, il est nécessaire de retirer les tirants puis de faire bouger les modules les uns par rapport aux autres, ce qui impose de rompre l'étanchéité de la nourrice. Ceci induit la purge du réseau fluide auquel est connectée la nourrice. Cet inconvénient n'est pas gênant dans le domaine de la distribution d'eau potable dans un immeuble, dans la mesure où une nourrice est généralement installée pour plusieurs dizaines d'années, sans que sa configuration soit modifiée ultérieurement. Il est toutefois rédhibitoire dans certains domaines où la configuration d'une nourrice doit pouvoir être modifiée en cours d'utilisation.

En effet, dans le domaine des installations de moulage et dans d'autres domaines techniques, il arrive que la configuration d'une nourrice doive être modifiée, par exemple en cas de changement du moule équipant une presse. Tel est le cas lorsqu'il convient d'ajuster l'orientation de tuyaux flexibles qui relient la nourrice à certaines parties du moule, dans la mesure où l'on cherche à réduire les zones de forte courbure des tuyaux et à tenir compte des obstacles susceptibles de se trouver sur le trajet d'un tuyau. Avec les matériels connus, il est nécessaire de purger le système d'alimentation en fluide caloporteur du moule avant d'intervenir sur la nourrice pour modifier sa configuration puis de la remettre « en eau ». Ces opérations sont longues et requièrent un personnel qualifié, ce qui est économiquement désavantageux.

Des problèmes techniques du même ordre se posent dans d'autres domaines d'utilisation d'une nourrice de distribution ou de collecte de fluide, dès lors que sa configuration doit pouvoir être modifiée après sa première mise en service.

C'est à ces inconvénients qu'entend plus particulièrement remédier l'invention en proposant une nouvelle nourrice qui est plus facile est plus économique à adapter à ses conditions d'exploitation.

A cet effet, l'invention concerne une nourrice de distribution ou de collecte d'un fluide, cette nourrice comprenant un empilement formé par au moins plusieurs modules tubulaires et un premier support, au moins un tirant de mise en compression de l'empilement, dans une configuration où des volumes internes centraux des différents modules sont en communication, avec recouvrement étanche de pièces adjacentes de l'empilement, et où la position relative de deux modules adjacents est fixe. Cette nourrice est caractérisée en ce que le tirant est apte à être fixé, en rotation autour de son axe longitudinal et en translation parallèlement à cet axe, par rapport au premier support, alors que, au niveau d'une extrémité, le tirant est équipé d'un écrou de serrage qui, en position serrée, exerce un effort de compression sur l'empilement de modules et sur le premier support, et alors qu'une butée, apte à être fixée axialement par rapport au premier support et à recevoir en appui une surface de l'écrou de serrage lorsque celui-ci est actionné dans le sens de desserrage, est disposée, par rapport à la surface de l'écrou de serrage en position serrée, à une distance axiale inférieure à la plus petite des longueurs de recouvrement étanche de deux pièces adjacentes de l'empilement.

Grâce à l'invention, la butée permet un desserrage partiel de l'écrou jusque dans une configuration où la position relative de deux modules adjacents peut être ajustée, sans avoir à démonter complètement la nourrice, et en particulier sans risque de perte de l'étanchéité entre deux modules adjacents car la course de desserrage a une longueur inférieure à la longueur minimale d'écartement sur laquelle deux pièces adjacentes de l'empilement sont en recouvrement étanche. L'invention permet donc d'adapter la nourrice à ses conditions d'exploitation, sans avoir à purger au préalable un système de circulation de fluide à laquelle appartient la nourrice.

Dans la présente demande, les termes « axial », « radial », « axialement » et « radialement » et les autres termes analogues se rapportent à un axe longitudinal de la nourrice, à moins qu'il n'en soit précisé autrement. Ainsi, par exemple, une dimension axiale est mesurée parallèlement à cet axe et une surface radiale entoure cet axe.

Selon des aspects avantageux mais non obligatoires de l'invention, une telle nourrice peut incorporer une ou plusieurs des caractéristiques suivantes prises dans toutes configurations techniquement admissibles :
- La surface de l'écrou de serrage est en appui contre la butée dans une position où les modules peuvent tourner par rapport au support et/ou les uns par rapport aux autres, autour d'un axe parallèle à l'axe longitudinal du tirant, alors que les pièces adjacentes de l'empilement sont en recouvrement étanche.
- Le recouvrement étanche entre deux pièces adjacentes est réalisé par une jupe externe annulaire d'une première pièce entourant une jupe interne annulaire d'une deuxième pièce adjacente à la première, avec interposition d'au moins un joint d'étanchéité disposé dans une gorge ménagée dans l'une des surfaces radiales en regard de la jupe externe et de la jupe interne.
- Le tirant est disposé dans le volume interne de la nourrice et traverse les volumes internes des différents modules.
- L'empilement comprend un deuxième support apte à être fixé par rapport au premier support et la butée est solidaire de ce deuxième support, au moins parallèlement à l'axe longitudinal du tirant.
- Une coiffe rapportée sur le deuxième support est percée d'un orifice de passage de l'écrou de serrage, la butée est formée par un siège ménagé autour de cet orifice, sur le côté de la coiffe tourné vers le deuxième support, ce siège étant apte à recevoir en appui une collerette radiale externe de cet écrou.
- L'écrou de serrage est vissé dans un écrou de blocage immobilisé en rotation, autour de l'axe de rotation de l'écrou de serrage.
- La nourrice comprend un troisième support du tirant, qui est disposé dans une partie intermédiaire de la nourrice, au sein de l'empilement de modules.
- Le premier support, et éventuellement le deuxième support et/ou le troisième support est ou sont pourvu(s) de moyens de fixation sur une structure de supportage.
- Le tirant est monté sur le premier support au moyen d'un écrou d'assemblage vissé sur le tirant, de forme extérieure polygonale et qui est immobilisé par complémentarité de formes dans un logement correspondant du premier support, et au moyen d'un écrou de maintien vissé sur le tirant et apte à exercer, avec l'écrou d'assemblage, un effort de pincement d'une partie du premier support entre ces deux écrous.

L'invention concerne également une installation de moulage qui comprend au moins un moule alimenté en fluide caloporteur par un système de circulation de fluide, cette installation comprenant, entre autres, au moins une nourrice telle que mentionnée ci-dessus fixée sur une structure de supportage.

Une telle installation est plus facile et plus économique à exploiter que celles de l'état de la technique.

L'invention sera mieux comprise et d'autres avantages de celle-ci apparaitront plus clairement à la lumière de la description qui va suivre de trois modes de réalisation d'une nourrice et d'une installation de moulage conforme à son principe, donné uniquement à titre d'exemple et faite en référence aux dessins dans lesquels :
- la figure 1 est une vue en perspective d'une nourrice conforme à l'invention utilisée dans une installation de moulage représentée de façon partielle et schématique,
- la figure 2 est une coupe de la nourrice selon la ligne II-II à la figure 1,
- la figure 3 est une vue à plus grande échelle du détail III à la figure 2,
- la figure 4 est une vue à plus grande échelle du détail IV à la figure 2,
- la figure 5 est une vue à plus grande échelle du détail V à la figure 2,
- la figure 6 est une vue analogue à la figure 3, pour une nourrice conforme à un deuxième mode de réalisation de l'invention,
- la figure 7 est une vue analogue à la figure 4 pour une nourrice conforme à un troisième mode de réalisation de l'invention, et
- la figure 8 est une coupe selon la ligne VIII-VIII à la figure 7.

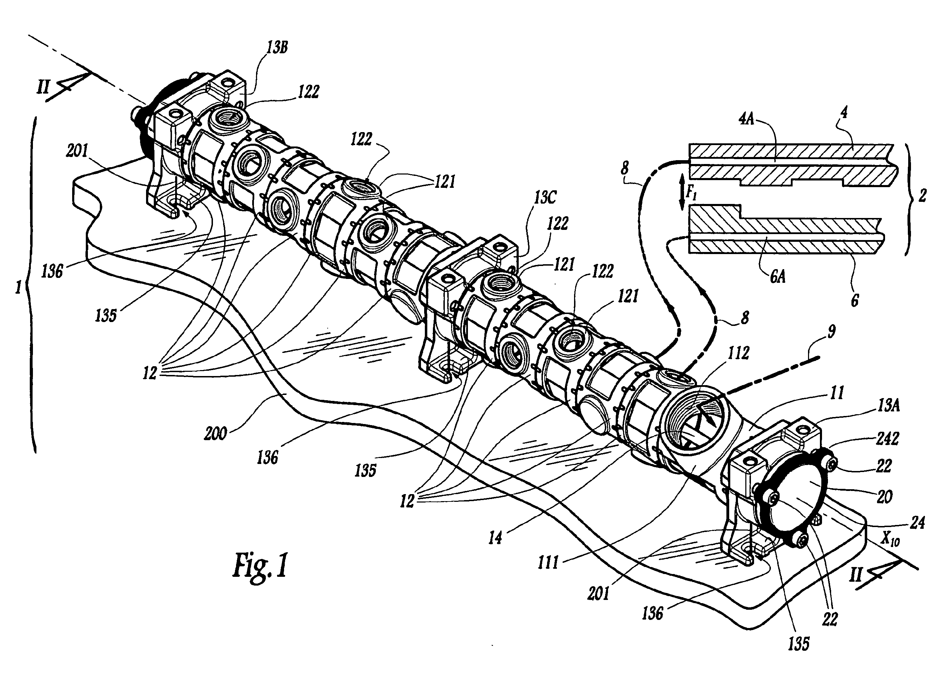

L'installation 1 représentée de façon schématique et partielle à la figure 1 comprend un moule 2 dont le poinçon 4 et la matrice 6 sont mobiles l'un par rapport à l'autre, dans la direction de la double flèche F₁, et sont conçus pour mouler une matière plastique. Pour maintenir la matière plastique à une température adaptée à son moulage, le poinçon 4 et la matrice 6 sont chacun équipés d'un conduit 4A, respectivement 6A, dans lequel circule un fluide caloporteur porté à une température adaptée.

Les conduits 4A et 6A sont alimentés en fluide caloporteur par des tuyaux flexibles 8 représentés par leurs traits d'axe et qui sont raccordés sur une nourrice 10.

En pratique, l'installation 1 comprend plusieurs moules du type du moule 2 et la nourrice 10 permet d'alimenter différents conduits équipant les poinçons et matrices de ces différents moules, étant rappelé qu'un poinçon ou une matrice peut être équipé de plusieurs tels conduits.

La nourrice 10 est formée par l'empilement de plusieurs modules, le long d'un axe X₁₀ qui constitue un axe longitudinal de la nourrice 10.

La nourrice 10 comprend un module d'entrée 11 en acier matrice et qui définit un piquage 111 s'étendant radialement par rapport à l'axe X₁₀ et dont la paroi interne est équipée d'un taraudage 112. Il est ainsi possible de visser sur le piquage 111 un conduit 9 d'alimentation de la nourrice 10 en liquide caloporteur, ce conduit 9 étant représenté par son trait d'axe.

La nourrice 10 comprend également onze modules de sortie 12 qui sont identiques, en acier matricé, et qui permettent de répartir le fluide se trouvant dans le volume interne V₁₀ de la nourrice 10 entre onze points d'utilisation distincts.

Chaque module 12 est équipé d'un piquage 121 qui s'étend radialement par rapport à l'axe X₁₀ et dont la surface interne est pourvue d'un taraudage 122 dans lequel peut être vissée l'extrémité d'un tuyau 8 prévu à cet effet.

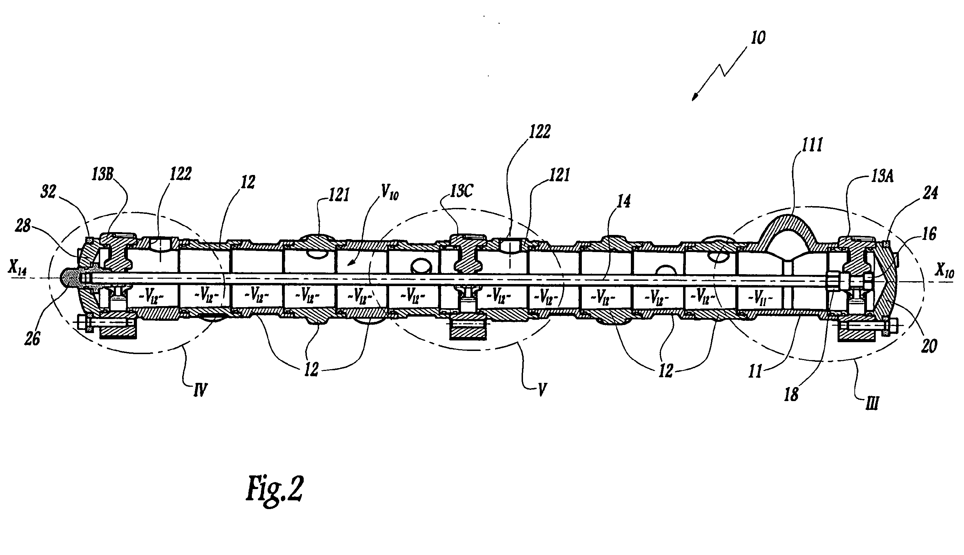

Comme il ressort plus particulièrement de la figure 2, chaque module 11 ou 12 est tubulaire et son volume interne V₁₁, respectivement V₁₂, communique avec le volume interne d'un module adjacent.

En plus des modules 11 et 12, la nourrice 10 comprend trois supports 13A, 13B et 13C qui sont identiques et qui sont en acier moulé.

Le volume interne V₁₀ de la nourrice 10 comprend les volumes internes V₁₁ et V₁₂ et les volumes internes des supports 13A, 13B et 13C.

La nourrice 10 comprend également un tirant 14 dont l'axe longitudinal X₁₄ est confondu avec l'axe X₁₀ en configuration montée de la nourrice. Le tirant 10 s'étend à l'intérieur des volumes V₁₁ et V₁₂ et des volumes des supports 13A, 13B et 13C, de sorte qu'il est protégé mécaniquement de l'environnement extérieur sur l'essentiel de sa longueur.

Une première extrémité filetée 142 du tirant 14 est immobilisée sur le support 13A. Un écrou d'assemblage 16 est vissé sur l'extrémité 142 et reçu dans un logement 131 formé sur une nervure centrale 132 du support 13A. La section du logement 131 prise perpendiculairement à l'axe X₁₀ est hexagonale et complémentaire de la section extérieure de l'écrou d'assemblage 16, de sorte que cet écrou reçu dans ce logement est immobilisé en rotation autour des axes X₁₀ et X₁₄, alors confondus.

Par ailleurs, un écrou de maintien 18 est vissé sur le tirant 14, à proximité de son extrémité 142 et comprend une jupe 182 à section circulaire qui est engagée dans un logement 133 formé par la nervure 132, sur son côté opposé au logement 131. Un orifice 134 à section circulaire relie les logements 131 et 133 à travers la nervure 132. Cet orifice 134 a un diamètre légèrement supérieur à celui de l'extrémité 142 du tirant 14 qui le traverse.

Ainsi, il est possible de visser l'écrou de maintien 18 sur le tirant 14 puis d'engager l'extrémité 142 dans le logement 134 avant de visser l'écrou d'assemblage 16 sur l'extrémité 142. Il est alors possible d'engager l'écrou d'assemblage 16 dans le logement 131, de sorte que l'écrou d'assemblage 16 est immobilisé en rotation autour de l'axe X₁₀. On peut alors serrer l'écrou de maintien 18 sur le tirant 14, en direction de l'écrou d'assemblage 16, ce qui a pour effet de faire pénétrer sa jupe 182 dans le logement 133 jusqu'à ce qu'un effort de pincement E₁ soit exercé par les écrous d'assemblage et maintien 16 et 18 sur la nervure 132. Le tirant 14 est alors fermement immobilisé par rapport au support 13A, à la fois en rotation et en translation par rapport à l'axe X₁₀.

Une coiffe 20 est montée sur le support 13A au moyen de trois vis 22. Cette coiffe 20 forme un bouchon d'extrémité pour la nourrice 10.

Une bague de repérage 24 est montée autour de la coiffe 20 et comprend trois oreilles 242 pourvues d'orifices qui sont traversés par les vis 22, ce qui permet de maintenir la bague 24 en position visible de l'extérieur sur la nourrice 10. Cette bague 24 est colorée, ce qui permet d'identifier, par exemple, la nature ou la température du fluide transitant par la nourrice 10. Ainsi, la bague 24 peut être de couleur rouge lorsque le fluide transitant par la nourrice 10 a une température supérieure à une valeur prédéterminée, par exemple 200 °C, et de couleur bleue lorsque ce fluide a une température inférieure à cette valeur prédéterminée.

A l'extrémité de la nourrice 10 opposée au support 13A, le support 13B soutient la deuxième extrémité filetée 144 du tirant 14. Cette extrémité 144 traverse avec jeu l'orifice 134 du support 13B qui s'étend entre les logements 131 et 133 formés par la nervure interne 132 du support 13B.

Un écrou de serrage 26 borgne est vissé sur l'extrémité 144 et comprend une jupe 262 annulaire et à section circulaire, qui est engagée dans le logement 133. L'écrou de serrage 26 est également pourvu d'une collerette radiale externe 264 et d'une partie polygonale 266 qui permet sa manoeuvre avec une clef adaptée, afin de l'entraîner en rotation autour des axes X₁₀ et X₁₄ confondus. Comme il ressort des explications qui suivent, l'écrou de serrage 26 permet d'exercer, sur l'empilement de modules 11 et 12 et de supports 13A, 13B et 13C, un effort de compression qui permet de maintenir la nourrice dans la configuration empilée et comprimée qui est représentée aux figures 1 à 7.

Une coiffe 28 est immobilisée sur le support 13B au moyen de trois vis 30 qui sont identiques aux vis 22. De manière analogue à la bague 24, une bague de couleur 32 est utilisée pour repérer le type de fluide traversant la nourrice 10. Les bagues 24 et 32 peuvent avoir des couleurs identiques ou différentes, en fonction des conventions de repérage utilisées. Une nourrice avec une ou plusieurs bagues de couleur rouge est ainsi utilisée sur le circuit d'alimentation des parties de moule en fluide caloporteur dit « chaud », auquel cas la nourrice 10 fonctionne en tant que distributeur. Dans le cas où la nourrice fonctionne en tant que collecteur du liquide caloporteur dit « froid » provenant des différents moules 2, la nourrice peut être équipée de bagues 24 et 32 de couleur bleue.

La coiffe 28 est percée d'un orifice 282 de passage de l'écrou de serrage 26, de sorte que sa partie 266 est accessible de l'extérieur, alors même que la jupe 262 et la collerette 264 sont disposées dans le volume intérieur de la nourrice 10. La partie de l'écrou de serrage 26 qui traverse l'orifice 282 est pourvue d'une gorge périphérique 268 dans laquelle est disposé un joint torique 41 qui assure l'étanchéité entre les pièces 26 et 28.

Le troisième support 13C est disposé dans une partie médiane de la nourrice 10 et son orifice 134 forme un palier de supportage d'une partie intermédiaire du tirant 14.

Le corps 124 de chaque module de sortie 12 définit deux ouvertures opposées O₁ et O₂, axiales et centrées sur l'axe X₁₀, de communication de son volume intérieur V₁₂ avec le ou les volumes intérieurs V₁₁ et/ou V₁₂ de modules 11 1 ou 12 adjacents. L'ouverture O₁ d'un module 12 est bordée par une jupe 126, dite externe, qui est annulaire et à section circulaire et dont on note R₁₂₆ le rayon intérieur. L'ouverture opposée O₂ d'un module 12 est bordée par une deuxième jupe 128, dite interne, qui est également annulaire et à section circulaire et dont on note R₁₂₈ le rayon extérieur. La valeur du rayon R₁₂₈ est légèrement inférieure à la valeur du rayon R₁₂₆, de sorte qu'il est possible d'emboiter la jupe interne 128 d'un module 12 radialement à l'intérieur de la jupe externe 126 d'un autre module 12 adjacent, lorsqu'un empilement de deux modules 12 est réalisé.

Chaque jupe interne 128 est pourvue d'une gorge périphérique externe 129 dans laquelle est disposé un joint torique 36. Ceci permet d'assurer l'étanchéité de l'assemblage entre deux modules 12 empilés l'un contre l'autre, dans la configuration des figures 2 à 5.

En configuration empilée et comprimée de deux modules 12 adjacents, la surface radiale interne de la jupe externe 126 d'un module 12 entoure la surface radiale externe de la jupe interne 128 d'un module 12 adjacent. On note L₁ la longueur axiale, c'est-à-dire la longueur mesurée parallèlement à l'axe X₁₀, de la zone de recouvrement des jupes 126 et 128 située entre, d'une part, le bord de la gorge 129 le plus éloigné du bord libre de la jupe 128 d'un module 12 et, d'autre part, le bord libre de la jupe 126 d'un second module 12 adjacent, en configuration empilée et comprimée de la nourrice. Cette longueur axiale L₁ correspond à la distance maximale d'écartement, avec maintien de l'étanchéité au niveau de la zone de recouvrement des deux modules 12 adjacents, lorsqu'on écarte axialement deux modules 12 l'un par rapport à l'autre à partir de cette configuration. En d'autres termes, la longueur L₁ est la longueur de recouvrement étanche de deux modules 12 adjacents.

De la même façon, le corps 114 du module 11 est pourvu d'une jupe externe 116 et d'une jupe interne 118 qui ont respectivement la même géométrie et les mêmes dimensions radiales que les jupes 126 et 128. La jupe interne 118 est pourvue d'une gorge périphérique externe 119 dans laquelle est également disposé un joint 36. La jupe interne 118 du module 11 est emboîtée dans la jupe externe 126 du module 12 adjacent, comme expliqué ci-dessus pour les jupes interne et externe de deux modules 12 adjacents. On note L₂ la longueur de recouvrement étanche définie comme précédemment, à l'interface entre le module 11 et le module 12 adjacent. La longueur L₂ est mesurée axialement entre le bord de la gorge 119 le plus éloigné de la jupe interne 118 et le bord libre de la jupe 126 du module 12 adjacent au module 11.

Un anneau 38 de liaison étanche est disposé entre le module 11 et le support 13A, en étant équipé de deux joints toriques 40 disposés dans deux gorges périphériques externes 382 et 384 de cet anneau 38. Cet anneau 38 est engagé à l'intérieur de la jupe externe 116 du module 11, comme le serait une jupe interne 128 d'un module 12, et à l'intérieur d'une jupe externe 137 du support 13A. En configuration empilée et comprimée de la nourrice, l'anneau 38 est disposé axialement entre des épaulements internes du corps 11 et du support 13A. Dans cette configuration, la jupe 116 du module 11 recouvre la gorge 382, alors que la jupe 137 du support 13A recouvre la gorge 384.

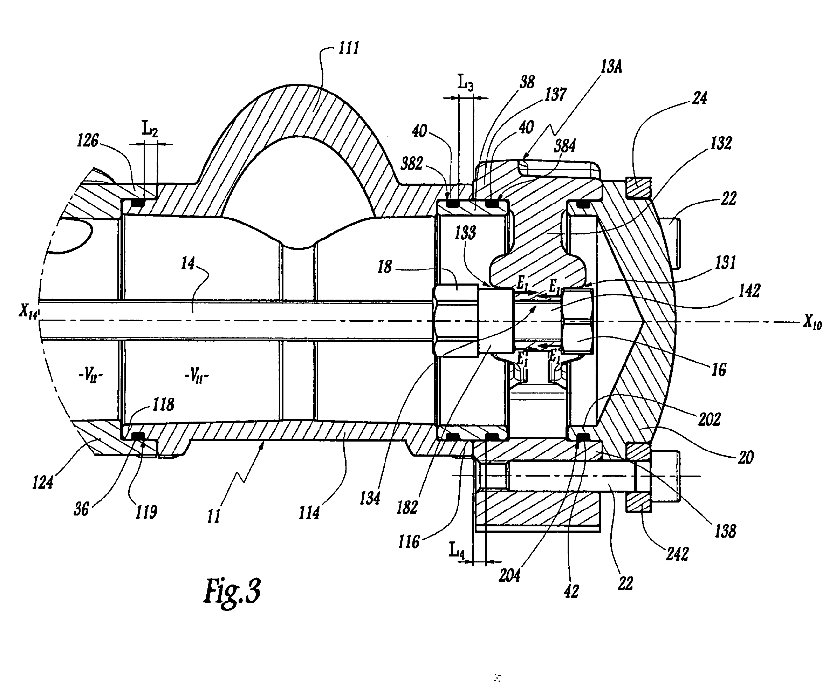

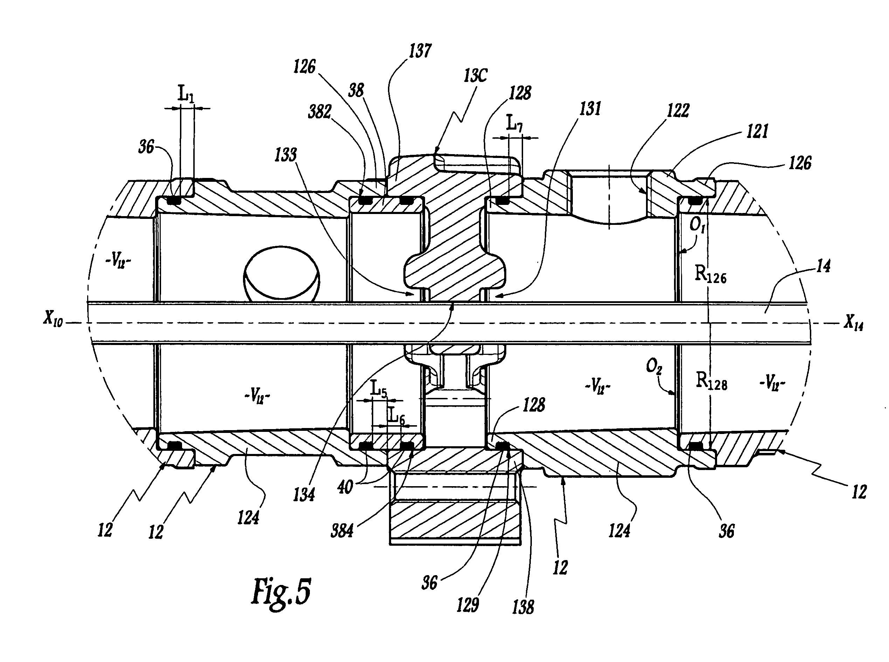

On note L₃ la longueur de recouvrement étanche, en configuration empilée et comprimée de la nourrice 10, du module 11 et de l'anneau 38. La longueur L₃ est mesurée axialement entre le bord de la gorge 382 le plus proche de la gorge 384 et le bord libre de la jupe externe 116 lorsque l'anneau 38 est en appui contre l'épaulement interne correspondant du support 13A. On note L₄ la longueur de recouvrement étanche, en configuration empilée et comprimée de la nourrice 10, entre le support 13A et l'anneau 38. La longueur L₄ est mesurée axialement entre le bord de la gorge 384 le plus proche de la gorge 382 et le bord libre de la jupe 137 lorsque l'anneau 38 est en appui contre l'épaulement correspondant du module 11. Compte tenu des tolérances de fabrication, l'anneau 38 peut ne pas être simultanément en appui sur les épaulements du module 11 et du support 13A. La représentation de la longueur L₃ sur la figure 3 est donc approximative. Il en va de même pour la longueur L₅ définie ci-après et représentée à la figure 5.

La coiffe 20 est équipée d'une jupe 202 engagée dans le support 13A et qui porte une gorge périphérique externe 204 dans laquelle est disposé un joint torique 42. De la même façon, la coiffe 28 a une jupe 284 pourvue d'une gorge périphérique externe 286 dans laquelle est disposé un joint torique 44. La jupe 202 est engagée dans une jupe externe 138 du support 13A.

Un deuxième anneau d'étanchéité 38, identique au premier, est disposé entre le support 13C et le module 12 représenté sur la gauche de ce support à la figure 5, d'une façon analogue à celui utilisé au voisinage du support 13A, en étant respectivement engagé dans des jupes externes 126 et 137 d'un module 12 et du support 13C. La jupe interne 128 du module 12 représenté sur la droite de ce support à la figure 5 est, quant à elle, engagée dans le volume interne du support 13C, de la même façon que la jupe 202 de la coiffe 20 est engagée dans le volume interne du support 13A. La jupe 284 de la coiffe 28 est engagée dans la jupe 137 du support 13B et la jupe interne 128 d'un module 12 est engagée dans la jupe 138 de ce support.

Le volume interne V₁₀ de la nourrice est formé par la réunion des volumes internes V₁₁ et V₁₂ avec les volumes internes des anneaux 38, les volumes internes des supports 13A, 13B et 13C et les volumes internes des coiffes 20 et 28.

Les ouvertures O₁ et O₂ des modules 12 permettent de mettre en communication leurs volumes intérieurs également avec les volumes intérieurs des anneaux 38 et des supports 13A, 13B et 13C.

On définit, de façon analogue à ce qui est mentionné ci-dessus, les longueurs de recouvrement étanche suivantes qui sont mesurées en configuration empilée et comprimée de la nourrice :
- L₅ : longueur axiale mesurée entre, d'une part, le bord de la gorge 382 du deuxième anneau 38 le plus proche de la gorge 384 de cet anneau et, d'autre part, le bord libre de la jupe 126 qui recouvre cette gorge, lorsque l'anneau 38 est en appui contre l'épaulement correspondant du support 13C.
- L₆ : longueur axiale mesurée entre, d'une part le bord de la gorge 384 du deuxième anneau 38 le plus proche de la gorge 382 de cet anneau et, d'autre part, le bord libre de la jupe 137 du support 13C, lorsque l'anneau 38 est en appui contre l'épaulement correspondant du module 12.
- L₇ : longueur axiale mesurée entre, d'une part, le bord de la gorge 129 le plus éloigné du bord libre de la jupe interne 128 d'un module 12 engagée dans le support 13C et, d'autre part, le bord libre de la jupe 138 du support 13C.
- L₈: longueur axiale mesurée entre, d'une part, le bord de la gorge 129 le plus éloigné du bord libre de la jupe 128 d'un module 12 engagée dans le support 13B et, d'autre part, le bord libre de la jupe 138 de ce support.

Les longueurs L₁ et L₂ ont la même valeur, de même que les longueurs L₃ et L₅, les longueurs L₄ et L₆ et les longueurs L₇ et L₈. On peut prévoir, par construction, que les valeurs Lᵢ, pour i compris entre 1 et 8, ont la même valeur. Ceci n'est toutefois pas obligatoire).

Les longueurs de recouvrement étanche L₁ à L₈ peuvent être définies d'une autre manière, pour autant qu'elles correspondent à une longueur axiale d'écartement de deux pièces adjacentes sur laquelle une étanchéité est assurée au niveau de la zone de recouvrement de ces deux pièces adjacentes en partant d"une configuration empilée et comprimée de la nourrice.

On note Lₘ la longueur de recouvrement étanche minimale, c'est-à-dire dont la valeur est la plus petite, parmi les longueurs Lᵢ pour i compris entre 1 et 8, c'est-à-dire parmi les longueurs de recouvrement étanche de chaque couple de pièces adjacentes de l'empilement.

Lorsque les supports 13A et 13B sont pressés l'un vers l'autre, l'empilement formé par les éléments 11, 12, 13A, 13B, 13C et 38 constitue, par la réunion des volumes V₁₁ et V₁₂, un conduit de circulation du fluide caloporteur entre le piquage 111 et les différents piquages 121, le volume interne de ce conduit étant isolé de l'extérieur par le recouvrement étanche mutuel des jupes et des parties correspondantes des éléments 11, 12, 13A à 13C et 38, et la fixation étanche des pièces 20 et 28, ainsi que par les joints correspondants 34, 36, 40, 42 et 44.

Pour exercer un effort de compression sur l'empilement, il suffit de visser l'écrou de serrage 26 sur l'extrémité 144 du tirant 14 jusqu'à ce que la face annulaire d'extrémité 263 de la jupe 262 exerce sur le fond du logement 133 un effort de compression E₂ auquel répond un effort de compression non représenté de même intensité, exercé par l'écrou d'assemblage 16 sur le fond du logement 131 du support 13A.

Dans cette configuration, l'effort de compression immobilise en rotation, par friction, les différents modules et supports les uns par rapport aux autres autour des axes X₁₀ et X₁₄ qui sont alors confondus.

Lorsqu'on assemble la nourrice, on commence par solidariser le tirant 14 avec le support 13A, à la fois en rotation et en translation, comme expliqué ci-dessus, ceci grâce à l'écrou d'assemblage 16 et à l'écrou de maintien 18. On met alors en place successivement autour du tirant 14, un anneau 38, le module 11, cinq modules 12, le support 13C, un deuxième anneau 38, six modules 12 puis le support 13B. On constitue ainsi un empilement qui comprend, entre autres, le module 11, plusieurs modules 12 et le support 13A. Lors de ces opérations, on fait passer le tirant 14 successivement dans le volume intérieur V₁₁ ou V₁₂ de chaque module 11 ou 12, dans l'orifice 134 des supports 13B et 13C et à l'intérieur des anneaux 38. On visse alors l'écrou de serrage 26 sur l'extrémité 144, ce qui permet d'exercer l'effort de compression E₂ qui assure la mise en contact des modules et supports pour leur verrouillage axial relatif et l'immobilisation en rotation des différents modules. On peut alors mettre en place les coiffes 20 et 28 sur l'empilement, respectivement au moyen des vis 22 et 30, pour l'étanchéité de la nourrice 10.

Chaque support 13A, 13B et 13C est équipé d'une semelle 135 dans laquelle sont ménagées deux encoches, dont une seule est visible à la figure 1 avec la référence 136, étant entendu qu'une encoche du même type est disposée pour chaque support 13 de façon symétrique par rapport au plan de coupe de la figure 2. Ces encoches 136 permettent de fixer les supports 13A, 13B et 13C, et par là-même la nourrice 10 en configuration empilée et comprimée, sur une structure porteuse telle qu'une table 200 au moyen de vis 201 représentées par leurs traits d'axes. Ainsi, les supports 13A, 13B et 13C sont fixes les uns par rapport aux autres lorsque la nourrice 10 est montée sur la table 200.

Lorsqu'il convient d'ajuster l'orientation angulaire relative des différents modules 11 et/ou 12 vis-à-vis de la table 200, notamment pour tenir compte d'une évolution de la répartition des moules 2 dans l'environnement de la nourrice 10, il est possible de desserrer l'écrou de serrage 26 jusqu'à ce que sa collerette 264 vienne en appui contre une butée 288 formée par la portion de la coiffe 28 qui entoure l'orifice 282 sur l'intérieur, c'est-à-dire du côté de la coiffe tournée vers le support 13B. Un lamage 289 est ménagé autour de l'orifice 282, sur le côté intérieur de la coiffe 28 et il permet de recevoir une partie de la collerette 264. On note d₁ la distance axiale, prise parallèlement aux axes X₁₀ et X₁₄, entre, d'une part, la surface radiale 264A de la collerette 264 tournée vers le lamage 289 et, d'autre part, le fond du lamage 289 lorsque l'effort E₂ de compression de l'empilement est exercé par l'écrou de serrage 26. En d'autres termes, la surface radiale 264A s'étend à la distance d₁ de la butée 288 en configuration empilée et comprimée de la nourrice 10.

Lorsque la nourrice 10 est montée sur la table 200 comme expliqué ci-dessus, la butée 288, qui est fixe par rapport au support 13B, est également fixe par rapport au support 13A.

La géométrie des pièces constitutives de la nourrice 10 est choisie de telle sorte que la distance d₁ est inférieure à la longueur de recouvrement étanche minimale Lₘ.

La course de desserrage de l'écrou de serrage 26 par rapport au tirant 14 est limitée par l'appui de la collerette 264 sur la butée 288, c'est-à-dire sur le fond du lamage 289 qui forme un siège de réception et d'appui de la collerette 264. Cette course de desserrage a donc une longueur maximale égale à la distance d₁. Cette possibilité de desserrage partiel de l'écrou de serrage 26, alors même que les coiffes 20 et 28 de la nourrice 10 demeurent en place sur la nourrice, permet de réduire puis de supprimer l'effort E₂.

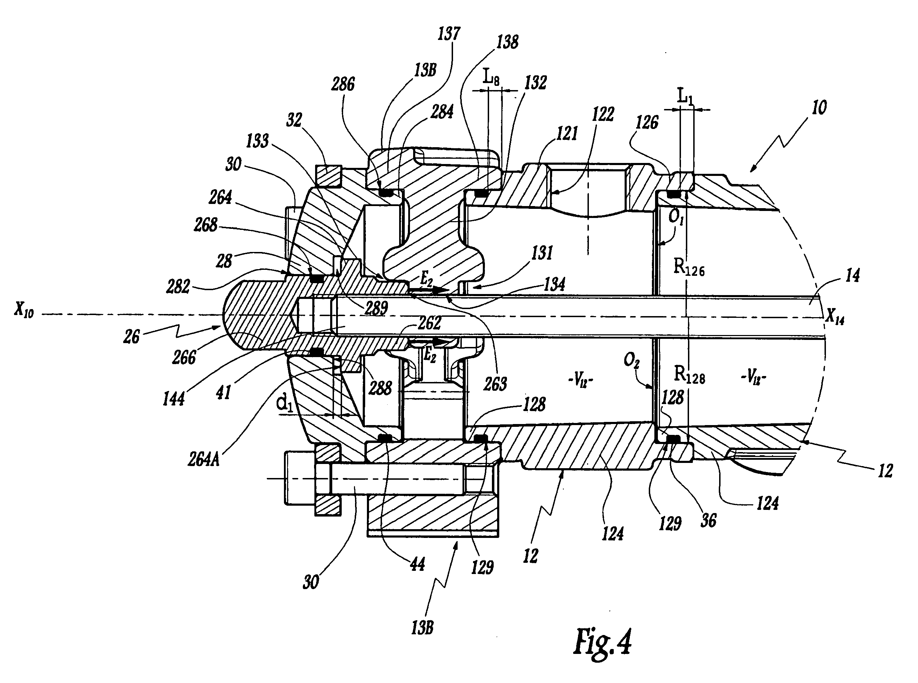

Si, après desserrage de l'écrou 26 et déplacement de celui-ci jusqu'au contact de la butée 28, un des supports 13A ou 13B ou tous les supports est ou sont désolidarisés de la table 200, l'écartement axial relatif de deux pièces de l'empilement est limité, d'un côté, par l'écrou d'assemblage 16 qui reste solidaire en translation du tirant 14 et, de l'autre côté, par la venue en butée du support 13B contre la face annulaire d'extrémité 263 de l'écrou de serrage 26 qui reste en prise avec le tirant. Comme l'écrou de serrage 26 a été déplacé, entre sa position serrée représentée à la figure 4 et sa position d'appui de la surface 264A sur la butée 28, sur la distance d₁ le long de l'axe X₁₄ et par rapport à la surface radiale de l'écrou 16 qui est en contact avec le support 13A, l'écartement axial relatif maximum entre deux pièces de l'empilement est inférieur à cette distance d₁.

Dans la mesure où la valeur de la distance d₁ est inférieure à la valeur de la longueur Lₘ, ce desserrage de l'écrou de serrage 26 permet d'écarter axialement deux pièces 11, 12, 13A à 13C ou 38 adjacentes, sur une distance axiale telle que chaque couple de pièces de l'empilement reste en recouvrement étanche. Ce desserrage partiel ne supprime donc pas l'étanchéité de l'isolation entre le volume interne V₁₀ de la nourrice 10 et son environnement extérieur. En revanche, ce desserrage réduit fortement l'effort de friction entre deux pièces adjacentes. Il est donc possible de modifier l'orientation angulaire relative d'un ou plusieurs des modules 11 et 12 sans avoir à purger cette nourrice, ce qui est tout à fait avantageux en termes de simplicité et de confort d'intervention.

Lorsque la configuration angulaire voulue des différents modules 11 et 12 est obtenue, il est possible de serrer à nouveau l'écrou de serrage 26 pour obtenir un effort de compression E₂ qui pérennise l'étanchéité de l'isolation entre le volume interne V₁₀ de la nourrice 10 et son environnement extérieur et qui assure l'immobilisation en rotation des différents modules par rapport à l'axe X₁₀. En d'autres termes, le nouveau serrage de l'écrou de serrage 26 verrouille les modules 11 et 12 en translation et en rotation par rapport aux supports 13A, 13B et 13C, donc par rapport à la table 200 lorsque ces supports sont solidarisés à la table.

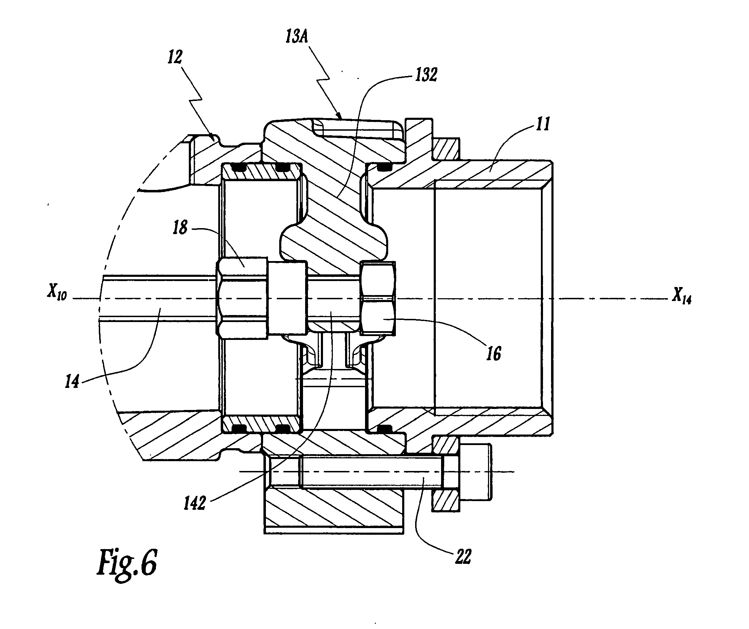

Dans le deuxième mode de réalisation de l'invention représenté à la figure 6, les éléments analogues à ceux du premier mode de réalisation portent les mêmes références. Dans ce qui suit, on ne décrit que ce qui distingue ce mode de réalisation du précédent. Dans ce mode de réalisation, l'orifice d'entrée du module d'entrée 11 est axial, c'est-à-dire parallèle à l'axe longitudinal X₁₀ de la nourrice 10, alors que les orifices de sortie des modules de sortie 12 sont radiaux.

Ce mode de réalisation suppose que la nervure 132 du support 13A est suffisamment ajourée pour permettre le passage du fluide transitant par la nourrice 10 sans créer des pertes de charge trop importantes. Le module d'entrée 11 est immobilisé de façon étanche sur le support 13A au moyen de vis 22, comme expliqué pour la coiffe 20 dans le premier mode de réalisation. Ce module 11 ne fait pas partie de l'empilement de modules et de supports qui peut être comprimé. L'orientation angulaire de ce module n'a pas à être ajustée puisque son piquage est axial.

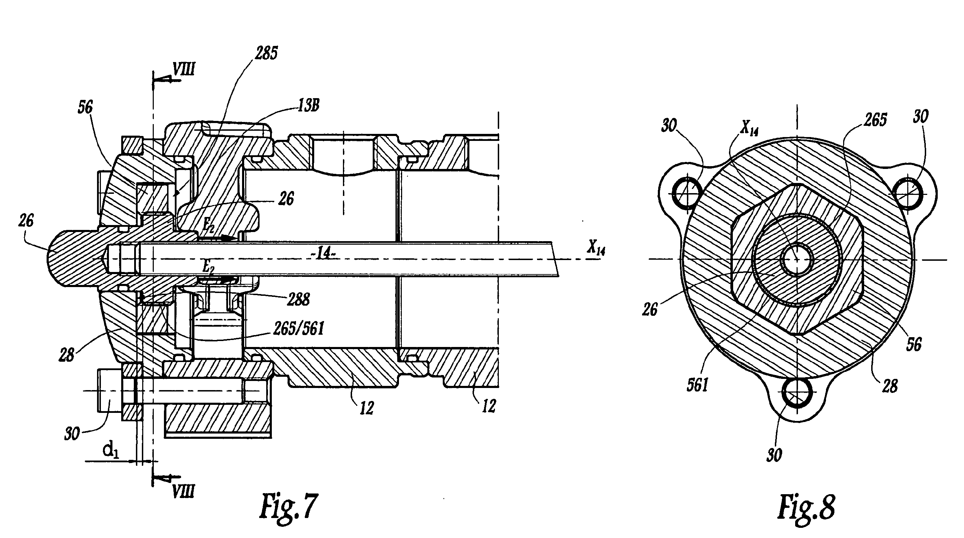

Dans le troisième mode de réalisation de l'invention représenté aux figures 7 et 8, les éléments analogues à ceux du premier mode de réalisation portent les mêmes références. Dans ce qui suit, on décrit principalement ce qui distingue ce mode de réalisation du premier mode de réalisation. Pour le reste, ces modes de réalisation sont identiques. L'écrou de serrage 26 est pourvu d'un filetage externe 265 qui coopère avec un taraudage interne 561 d'un écrou d'arrêt ou écrou de blocage 56 à section transversale externe polygonale, hexagonale dans l'exemple représenté. Les pas du taraudage interne et du filetage externe de l'écrou de serrage 26 sont identiques.

Lors de l'assemblage de la nourrice 10, le support 13B est mis en place autour du tirant 14 et l'écrou de serrage 26 est serré pour exercer l'effort de compression E₂ sur l'empilement de modules et de supports. On met alors en place l'écrou de blocage 56 dans un logement 285 de forme correspondante ménagé sur la face de la coiffe 28 orientée vers le support 13B. Dans le cas d'espèce, ce logement 285 est à section hexagonale complémentaire de la section extérieure de l'écrou de blocage 56. Cet écrou 56 est alors en appui contre le fond du logement 285. On visse alors l'ensemble formé des pièces 28 et 56 autour de l'écrou de serrage 26, jusqu'à ce que la coiffe 28 vienne axialement au contact du support 13B. La coiffe 28 est alors immobilisée sur le support 13B par trois vis 30.

Lorsqu'on dévisse l'écrou de serrage 26, celui-ci est en prise avec le taraudage 261 de l'écrou de blocage 56 et, lorsque l'écrou de serrage 26 parvient au contact de la butée 288 formée par la coiffe 28, l'écrou de blocage 56, qui est immobilisé en rotation autour de l'axe X₁₄ dans le logement 285 par coopération de formes avec la coiffe 28, elle-même solidaire en rotation du support 13B fixé à la table 200, s'oppose à la rotation de l'écrou de serrage 26 et constitue ainsi une butée franche au desserrage de l'écrou de serrage 26.

Pour pouvoir démonter complètement la nourrice 10, il est nécessaire de démonter la coiffe 28 et l'écrou de blocage 56, en dévissant l'ensemble formé par ces deux pièces par rapport à l'écrou de serrage 26 ou en démontant la coiffe 28 puis en dévissant l'écrou de blocage 56.

Dans les trois modes de réalisation décrits, le nombre et la répartition des modules d'entrée et de sortie 11 et 12 peuvent être modifiés par rapport à ce qui est représenté. En particulier, dans le premier mode de réalisation, le module d'entrée 11 n'est pas forcément disposé à proximité du premier support 13A.

Quel que soit le mode de réalisation après desserrage de l'écrou de serrage 26 jusqu'à la butée 288, la modification de l'orientation des différents modules peut avoir lieu sans risque de fuite alors que la nourrice est « en eau », c'est-à-dire sans qu'il soit nécessaire de la purger, ce qui induit un gain de temps et une grande simplicité de l'opération. Par ailleurs, pour rompre l'étanchéité de la nourrice, c'est-à-dire mettre en communication son volume interne V₁₀ avec l'extérieur, il est nécessaire de démonter l'une des coiffes 20 et 28 en retirant les différentes vis 22 ou 30. Pour démonter complètement la nourrice 10, on retire la coiffe 28 et on desserre l'écrou de serrage 26 au-delà de la position atteinte lorsque sa collerette 264 vient au contact de la butée 288. La manoeuvre d'ouverture de la nourrice 10 est donc relativement élaborée, ce qui permet d'éviter les risques d'accident de démontage non intentionnels de la nourrice, alors que celle-ci est en eau.

Comme le tirant 14 est disposé à l'intérieur de la nourrice, il est protégé contre les accrochages non intentionnels, ce qui garantit la sécurité de l'assemblage lorsque la nourrice est en eau. Le tirant 14 est également protégé contre les agressions chimiques. En outre, comme le tirant 14 est disposé en position centrale dans la nourrice 10 selon l'axe X₁₀, il est possible d'ajuster la position angulaire de chacun des modules 11 et 12 sur 360° autour de ce tirant.

Selon une variante non représentée de l'invention, applicable à tous les modes de réalisation, l'immobilisation en rotation et en translation de la première extrémité 142 du tirant 14 sur le support 13A peut être obtenue en ménageant un taraudage dans l'orifice 134, ce qui permet de supprimer l'écrou d'assemblage 16.

L'invention a été représentée dans le cas où un support intermédiaire 13C est utilisé. Ceci n'est toutefois pas obligatoire, notamment dans le cas où le nombre de modules 11 et 12 est relativement faible, de sorte que l'empilement ne risque pas de se déformer entre ses deux supports d'extrémité.

L'invention a été représentée dans le cas où les trois supports 13A, 13B et 13c utilisés sont identiques. Ceci est avantageux en termes de fabrication mais n'est toutefois pas obligatoire.

Les supports d'extrémité 13A et 13B, ou l'un seulement d'entre eux, peuvent être construits de façon qu'ils réalisent l'étanchéité à l'extrémité de la nourrice 10, sans avoir recours à une coiffe remplissant cette fonction. Dans ce cas, des moyens d'étanchéité sont prévus, entre le support d'extrémité traversé par le tirant et ce tirant, et la butée peut être montée sur le deuxième support 13B d'une façon autre que celle représentée à la figure 4, afin de limiter le desserrage de l'écrou de serrage 26.

L'invention a été représentée dans le cas d'une nourrice fonctionnant pour la distribution d'un fluide qui circule d'un module d'entrée 11 vers plusieurs modules de sortie 12. La nourrice peut également être utilisée pour collecter du fluide qui circule alors de chacun des modules 12, qui constituent des modules d'entrée, vers le module 11, qui constitue le module de sortie de la nourrice.

L'invention est représentée sur les figures dans le cas où les joints 36 et 40 sont disposés dans des gorges 119, 129 et 382 prévues sur les surfaces radiales externes des jupes internes 118 et 128 et des anneaux 38. En variante, les gorges de réception de certains ou de tous les joints peuvent être prévues sur les surfaces radiales internes des jupes externes 116, 126 137 et/ou 138. La définition des longueurs de recouvrement étanche est alors adaptée.

L'invention est représentée sur les figures dans le cas où le tirant 14 est solidaire, en rotation et en translation axiale, du premier support 13A. En variante, le tirant peut être solidaire en rotation par rapport à un support, par exemple le support 13C, et en translation axiale par rapport au support 13A, ces supports étant tous les deux fixés sur la table 200. Dans ce cas, le tirant est également fixe, à la fois en rotation et en translation, par rapport à chacun de ces supports.

Selon une autre variante, le tirant 14 peut être bloqué en translation, dans une direction parallèle à son axe, par rapport au support 13A et en butée, dans l'autre direction, contre la coiffe 20. Le blocage en rotation du tirant 14 dans le support 13A est alors obtenu par un moyen annexe, tel qu'une clavette.

Selon encore une autre variante, le tirant 14 peut être solidaire en rotation du support intermédiaire 13C, alors que deux écrous de serrage 26 et des butées 288 sont respectivement prévus au voisinage de ses deux extrémités 142 et 144.

## Revendications

1. Nourrice (10) de distribution ou de collecte de fluide, cette nourrice comprenant
- un empilement formé par au moins plusieurs modules tubulaires (11, 12) et un premier support (13A),
- au moins un tirant (14) de mise en compression de l'empilement dans une configuration où des volumes internes centraux (V₁₁, V₁₂) des différents modules sont en communication, avec recouvrement étanche de pièces adjacentes (11, 12, 13A-13C, 38) de l'empilement. et où la position relative de deux modules adjacents est fixe,
dans laquelle le tirant (14) est apte à être fixé, en rotation autour de son axe longitudinal (X₁₄) et en translation parallèlement à cet axe, par rapport au premier support (13A), et
dans laquelle au niveau d'une extrémité (144), le tirant est équipé d'un écrou (26) de serrage qui, en position serrée, exerce un effort de compression (E₂) sur l'empilement de modules (11, 12) et du premier support (13A),
**caractérisée en ce qu'**une butée (288), apte à être fixée axialement par rapport au premier support et à recevoir en appui une surface (264A) de l'écrou de serrage (26) lorsque celui-ci est actionné dans le sens de desserrage, est disposée, par rapport à la surface (264A) de l'écrou de serrage en position serrée, à une distance axiale (d₁) inférieure à la plus petite (Lₘ) des longueurs (L₁- L₈) de recouvrement étanche de deux pièces adjacentes (11, 12, 13A-13C, 38) de l'empilement,

2. Nourrice selon la revendication 1, **caractérisée en ce que** la surface (264A) de l'écrou de serrage (26) est en appui contre la butée (288) dans une position où les modules (11, 12) peuvent tourner, par rapport au support (13A) et/ou les uns par rapport aux autres, autour d'un axe (X₁₀) parallèle à l'axe longitudinal (X₁₄) du tirant (14), alors que les pièces adjacentes (11, 12, 13A-13C, 20, 28, 38) de l'empilement sont en recouvrement étanche.

3. Nourrice selon l'une des revendications précédentes, **caractérisée en ce que** le recouvrement étanche entre deux pièces adjacentes (11, 12, 13A-13B, 20, 28. 38) est réalisé par une jupe externe annulaire (116, 126, 137, 138) d'une première pièce (11, 12, 13A-13B) entourant une jupe interne annulaire (118, 128, 202, 284) d'une deuxième pièce (11, 12, 20, 28, 38) adjacente à la première pièce, avec interposition d'au moins un joint d'étanchéité (34, 36, 40, 42, 44) disposé dans une gorge (119, 129, 204, 286, 382, 384) ménagée dans l'une des surfaces radiales en regard de la jupe externe et de la jupe interne.

4. Nourrice selon l'une des revendications précédentes, **caractérisée en ce que** le tirant (14) est disposé dans le volume interne (V₁₀) de la nourrice et traverse les volumes internes (V₁₁, V₁₂) des modules.

5. Nourrice selon l'une des revendications précédentes, **caractérisée en ce que** l'empilement comprend un deuxième support (13B) apte à être fixé par rapport au premier support (13A) et **en ce que** la butée (288) est solidaire du deuxième support, au moins parallèlement à l'axe longitudinal (X₁₄) du tirant.

6. Nourrice selon la revendication 5, **caractérisée en ce qu'**une coiffe (28) rapportée sur le deuxième support (13B) est percée d'un orifice (282) de passage de l'écrou de serrage (26), **en ce que** la butée (288) est formée par un siège (289) ménagé autour de l'orifice, sur le côté de la coiffe tourné vers le deuxième support et **en ce que** ce siège est apte à recevoir en appui une surface (264A) d'une collerette radiale externe (264) de l'écrou de serrage.

7. Nourrice selon l'une des revendications 5 ou 6, **caractérisée en ce qu'**elle comprend un troisième support (13C) du tirant, qui est disposé dans une partie intermédiaire de la nourrice (10), au sein de l'empilement de modules (11, 12).

8. Nourrice selon l'une des revendications précédentes, **caractérisée en ce que** l'écrou de serrage (26) est vissé dans un écrou de blocage (56) immobilisé en rotation autour de l'axe de rotation (X₁₄) de l'écrou de serrage.

9. Nourrice selon l'une des revendications précédentes, **caractérisée en ce que** le premier support (13A), et éventuellement le deuxième support (13B) et/ou le troisième support (13C), est ou sont pourvus de moyens (136) de fixation sur une structure de supportage (200).

10. Nourrice selon l'une des revendications précédentes, **caractérisée en ce que** le tirant (14) est monté sur le premier support (13A) au moyen :
- d'un écrou d'assemblage (16) vissé sur le tirant, de forme extérieure polygonale et qui est immobilisé par complémentarité de formes dans un logement correspondant (131) du premier support et
- d'un écrou de maintien (18) vissé sur le tirant et apte à exercer, avec l'écrou d'assemblage, un effort de pincement (E₁) d'une partie (132) du premier support entre ces deux écrous.

11. Installation de moulage (1) comprenant au moins un moule (2) alimenté en fluide caloporteur par un système de circulation de fluide, **caractérisée en ce qu'**elle comprend au moins une nourrice (10) selon l'une des revendications précédentes fixée sur une structure de supportage (200).

## Claims

1. A manifold (10) for distributing or for collecting fluid, said manifold comprising:
■ a stack formed by at least a plurality of tubular modules (11, 12) and a first support (13A); and
■ at least one tie (14) for compressing the stack in a configuration in which central internal volumes (V₁₁, V₁₂) of the various modules are in mutual communication, with adjacent parts (11, 12, 13A-13C, 38) of the stack overlapping in leaktight manner, and in which the relative position of two adjacent modules is stationary, in which the tie (14) is suitable for being fastened, in rotation about its longitudinal axis (X₁₄) and in translation parallel to said axis, relative to the first support (13A); and
in which, at one end (144), the tie is equipped with a clamping nut (26) that, in the tightened position, exerts a compression force (E₂) on the stack of modules (11, 12) and of the first support (13A);
**characterized in that** an abutment (288), suitable for being fastened axially relative to the first support and for bearingly receiving a surface (264A) of the clamping nut (26) when said clamping nut is actuated in the loosening direction, is disposed, relative to the surface (264A) of the clamping nut in the tightened position, at an axial distance (d₁) less than the smallest (Lₘ) of the leaktight overlap lengths (L₁-L₈) of two adjacent parts (11, 12, 13A-13C, 38) of the stack.

2. A manifold according to claim 1, **characterized in that** the surface (264A) of the clamping nut (26) bears against the abutment (288) in a position in which the modules (11, 12) can turn, relative to the support (13A) and/or relative to one another, about an axis (X₁₀) parallel to the longitudinal axis (X₁₉) of the tie (14), while the adjacent parts (11, 12, 13A-13C, 20, 28, 38) of the stack overlap in leaktight manner.

3. A manifold according to one of the previous claims, **characterized in that** the leaktight overlap between two adjacent parts (11, 12, 13A-13B, 20, 28, 38) is implemented by an outer annular skirt (116, 126, 137, 138) of a first part (11, 12, 13A-13B) surrounding an inner annular skirt (118, 128, 202, 284) of a second part (11, 12, 20, 28, 38) adjacent to the first part, with at least one seal (34, 36, 40, 42, 44) being interposed by being disposed in a groove (119, 129, 204, 286, 382, 384) provided in one of the radial surfaces facing the outer skirt and the inner skirt.

4. A manifold according to one of the previous claims, **characterized in that** the tie (14) is disposed inside the internal volume (V₁₀) of the manifold and passes through the internal volumes (V₁₁, V₁₂) of the modules.

5. A manifold according to one of the previous claims, **characterized in that** the stack further comprises a second support (13B) suitable for being fastened relative to the first support (13A), and **in that** the abutment (288) is secured to the second support, at least parallel to the longitudinal axis (X₁₄) of the tie.

6. A manifold according to claim 5, **characterized in that** a cap (28) mounted on the second support (13B) is provided with an orifice (282) for passing the clamping nut (26), **in that** the abutment (288) is formed by a seat (289) provided around the orifice, on the side of the cap that faces towards the second support, and **in that** said seat is suitable for bearingly receiving a surface (264A) of a radially outer collar (264) of the clamping nut.

7. A manifold according to one of claims 5 or 6, **characterized in that** it further comprises a third support (13C) for the tie, which support is disposed in an intermediate portion of the manifold (10), within the stack of modules (11, 12).

8. A manifold according to one of the previous claims, **characterized in that** the clamping nut (26) is screwed into a locknut (56) that is held stationary in rotation about the axis of rotation (X₁₄) of the clamping nut.

9. A manifold according to one of the previous claims, **characterized in that** the first support (13A), and optionally the second support (13B) and/or the third support (13C) is/are provided with means (136) for fastening to a supporting structure (200).

10. A manifold according to one of the previous claims, **characterized in that** the tie (14) is mounted on the first support (13A) by means of
an assembly nut (16) screwed onto the tie, of polygonal outside shape and that is held stationary by complementary shapes in a corresponding recess (131) in the first support; and by means of
■ a holding nut (18) screwed onto the tie and suitable for acting, with the assembly nut, to exert a pinching force (E₁) for pinching a portion (132) of the first support between these two nuts.

11. A molding installation (1) comprising at least one mold (2) fed with heat-transfer fluid by a fluid circulation system, said installation being **characterized in that** it further comprises at least one manifold (10) according to any preceding claim that is fastened to a supporting structure (200).

## Patentansprüche

1. Verteiler (10) zum Verteilen oder Sammeln eines Fluids, wobei dieser Verteiler umfasst
- eine Stapelanordnung, die mindestens von mehreren Rohrmodulen (11, 12) und einem ersten Träger (13A) gebildet wird,
- mindestens ein Zugelement (14) zum Zusammendrücken der Stapelanordnung in eine Konfiguration, in der die zentralen Innenvolumen (V₁₁, V₁₂) der unterschiedlichen Module in Verbindung stehen mit undurchlässiger Überdeckung von benachbarten Teilen (11, 12, 13A-13C, 38) der Stapelanordnung und in der die relative Position von zwei benachbarten Modulen fest ist,
wobei das Zugelement (14) geeignet ist, In Drehung um seine Längsachse (X₁₄) und in Längsbewegung parallel zu dieser Achse in Bezug auf den ersten Träger (13A) befestigt zu werden und
wobei an einem Ende (144) das Zugelement mit einer Klemmmutter (26) ausgerüstet ist, die in festgezogener Stellung eine Kompressionskraft (E₂) auf die Stapelanordnung aus Modulen (11, 12) und dem ersten Träger (13A) ausübt,
**dadurch gekennzeichnet, dass** ein Anschlag (288), der geeignet ist, axial in Bezug auf den ersten Träger befestigt zu werden und in Anlage eine Fläche (264A) der Klemmmutter (26) aufzunehmen, wenn diese in der Richtung des Lösens betätigt wird, in Bezug auf die Fläche (264A) der Klemmmutter in festgezogener Stellung in einem axialen Abstand (d₁) angeordnet ist, der kleiner als die kleinste (Lₘ) Länge (L₁-L₈) der undurchlässigen Überdeckung von zwei benachbarten Teilen (11, 12, 13A - 13C, 38) der Stapelanordnung ist.

2. Verteiler nach Anspruch 1, **dadurch gekennzeichnet, dass** die Fläche (264A) der Klemmmutter (26) in Anlage gegen den Anschlag (288) in einer Position ist, in der die Module (11, 12) sich in Bezug auf den Träger (13A) und/oder zueinander um eine Achse (X₁₀) parallel zur Längsachse (X₁₄) des Zugelements (14) drehen können, wobei die benachbarten Teile (11, 12, 13A-13C, 20, 28, 38) der Stapelanordnung in undurchlässiger Überdeckung sind.

3. Verteiler nach einem der vorhergehenden Ansprüche, **dadurch gekennzeichnet, dass** die dichte Überdeckung zwischen zwei benachbarten Teilen (11, 12, 13A-13B, 20, 28, 38) durch eine äußere ringförmige Schürze (116, 126, 137, 138) eines ersten Teils (11, 12, 13A-13B), die eine innere ringförmige Schürze (118, 128, 202, 284) eines zweiten Teils (11, 12, 20, 28, 38), benachbart zum ersten Tell mit Zwischenschaltung mindestens einer Dichtung (34, 36, 40, 42, 44) umgreift, die in einer Nut (119, 129, 204, 384, 382, 384) angeordnet ist, die in einer der sich gegenüberstehenden radialen Flächen der äußeren Schürze und der inneren Schürze eingearbeitet ist.

4. Verteiler nach einem der vorhergehenden Ansprüche, **dadurch gekennzeichnet, dass** das Zugelement (14) in dem Innenvolumen (V₁₀) des Verteilers angeordnet ist und die Innenvolumen (V₁₁, V₁₂) der Module durchquert.

5. Verteiler nach einem der vorhergehenden Ansprüche, **dadurch gekennzeichnet, dass** die Stapelanordnung einen zweiten Träger (13B) umfasst, der geeignet ist, in Bezug auf den ersten Träger (13A) befestigt zu werden, und dass der Anschlag (288) mit dem zweiten Träger mindestens parallel zur Längsachse (X₁₄) des Zugelements fest verbunden ist.

6. Verteiler nach Anspruch 5, **dadurch gekennzeichnet, dass** eine auf dem zweiten Träger (13B) angebrachte Abdeckung (28) von einer Durchgangsöffnung (282) für die Klemmmutter (26) durchgriffen ist, dass der Anschlag (288) von einem Sitz (289) gebildet wird, der um die Öffnung auf der Seite der Abdeckung und zum zweiten Träger gerichtet angeordnet ist, und dass dieser Sitz geeignet ist, in Anlage eine Fläche (264A) eines äußeren radialen Flansches (264) der Klemmmutter aufzunehmen.

7. Verteiler nach einem der Ansprüche 5 oder 6, **dadurch gekennzeichnet, dass** er einen dritten Träger (13C) des Zugelements umfasst, der In einem Zwischenbereich des Verteilers (10) Inmitten der Stapelanordnung aus Modulen (11, 12) angeordnet ist.

8. Verteiler nach einem der vorhergehenden Ansprüche, **dadurch gekennzeichnet, dass** die Klemmmutter (26) in eine Blockiermutter (56) geschraubt ist, die bezüglich der Drehung um die Drehachse (X₁₄) der Klemmmutter festgelegt ist.

9. Verteiler nach einem der vorhergehenden Ansprüche, **dadurch gekennzeichnet, dass** der erste Träger (13A) und gegebenenfalls der zweite Träger (13B) und/oder der dritte Träger (13C) mit Mitteln (136) zur Befestigung auf einem Trägeraufbau (200) versehen ist/sind.

10. Verteiler nach einem der vorhergehenden Ansprüche, **dadurch gekennzeichnet, dass** das Zugelement (14) auf dem ersten Träger (13A) mittels:
- einer Verbindungsmutter (16) von polygonaler Außenform, die auf das Zugelement geschraubt ist und die durch komplementäre Formgebung in einem korrespondierenden Aufnahmeraum (131) des ersten Trägers aufgenommen ist, und
- einer Haltemutter (18), die auf das Zugelement geschraubt ist und geeignet ist, mit der Verbindungsmutter eine Kraft (E₁) zum Klemmen eines Teils (132) des ersten Trägers zwischen diesen zweit Muttern auszuüben,
befestigt ist

11. Formanlage (1), die mindestens eine Form (2) umfasst, die von einem System zur Zirkulation eines Fluids mit einem Wärmeträgerfluid versorgt wird, **dadurch gekennzeichnet, dass** sie mindestens einen Verteiler (10) nach einem der vorhergehenden Ansprüche umfasst, der auf einem Trägeraufbau (200) befestigt ist.
